# EUROPÄISCHE PATENTANMELDUNG

(11) **EP 1 120 639 A2**
(43) Veröffentlichungstag der Anmeldung: **01.08.2001**
(21) Anmeldenummer: 00128745.7
(22) Anmeldetag: 30.12.2000
(51) Int. Cl.: G01M 3/24

(54) **Verfahren zur Feststellung eines Lecks in einer Rohrleitung**

(30) Priorität: 24.01.2000 DE 10002826
(71) Anmelder: Hermann Sewerin GmbH, 33334 Gütersloh (DE)
(72) Erfinder: Rosenthal, Frank, 33397 Rietberg (DE)
(74) Vertreter: Specht, Peter, Dipl.-Phys.

(57) **Zusammenfassung**

Ein Verfahren zur Feststellung einer Leckstelle in einer von einem unter Druck stehenden Medium durchströmten Rohrleitung, bei dem mittels eines Mikrofons im Bereich der Rohrleitung vorhandene Geräusche erfaßt, digitalisiert und ausgewertet werden, ist so ausgebildet, daß mit den an sich bekannten Methoden der Signalverarbeitung die Frequenzanteile von typischerweise gleichmäßig auftretenden Störgeräuschen und gegebenenfalls die eines für ein Leckgeräusch typischen Dauergeräusches ermittelt und ausgewertet werden.

## Beschreibung

Die Erfindung betrifft ein Verfahren zur Feststellung eines Lecks in einer Rohrleitung gemäß dem Oberbegriff des Anspruchs 1.

Beim Austritt von Medien (flüssig oder gasförmig) aus einer unter Druck stehenden Rohrleitung oder einem Behälter entstehen Geräusche, durch die ein solches Leck feststellbar ist.
Hierzu sind verschiedene Verfahren bekannt, die jedoch allesamt den Nachteil haben, daß aufgrund stets vorhandener, mehr oder weniger intensiver Störgeräusche eine Leckstellenfeststellung äußerst problematisch ist.

Solche Störgeräusche können umweltbedingt sein, beispielsweise verursacht durch Verkehr oder betriebsbedingt, beispielsweise durch eine Wasserentnahme bei einer Wasser führenden Leitung.

Um den Störgeräuscheeinfluß zu minimieren, erfolgt vielfach eine Überprüfung von Rohrleitungen während der Nachtzeit, was jedoch mit einem insbesondere personellen Aufwand verbunden ist, der die Kosten der Überprüfung gegenüber einem Tageseinsatz erheblich steigen läßt.

Um die dadurch entstehenden hohen Personalkosten zu reduzieren, ist es bekannt, mehrere Mikrofone tagsüber beispielsweise auf Unterflurhydranten zu setzen. Die Mikrofone schalten sich nachts ein und speichern die gemessenen Schallpegel. Ein überhöhter Minimalpegel deutet auf eine in der Nähe befindliche Leckstelle hin. Eine Lokalisierung erfolgt anschließend beispielsweise dadurch, daß ein Lecksucher mit einem Empfänger, an dem verschiedene Arten von Mikrofonen anschließbar sind, direkt den entsprechenden Rohrleitungsbereich abschreitet, wobei durch den Empfänger die aufgenommenen Geräusche verstärkt, gegebenenfalls digitalisiert, weiter aufbereitet und auf einen Kopfhörer gegeben werden.

Neben dem erheblichen Arbeitsaufwand bei dieser Art der Leckfeststellung können weitere Probleme durch sehr laute Störgeräusche entstehen, die zu einem hohen Schalldruck im Kopfhörer führen. Zwar sind Geräte bekannt, die eine Schalldruckbegrenzung aufweisen, allerdings kann dies in besonderen Fällen zu einem ständigen Ab- und Einschalten führen.

Weiter ist unter dem Begriff Korrelations-Verfahren ein Verfahren zur Leckortung bekannt, bei dem zwei, die zu untersuchende Rohrleitungsstrecke begrenzende Mikrofone eingesetzt werden. Die aufgenommenen Geräusche werden vorzugsweise über Funk an einen Rechner weitergegeben, mit dessen Hilfe unter Zugrundelegung einer festgestellten Laufzeitdifferenz des aufgenommenen Geräusches der Ort der Leckage sehr genau bestimmt werden kann. Auch hier ist die Problematik der Störgeräusche gegeben, die eine Ermittlung der Leckstelle nur unter erschwerten Bedingungen möglich macht. Da das komplette Geräusch, also einschließlich der Störgeräusche, übertragen wird, können die oftmals sehr leisen Leckgeräusche bei einer begrenzten Bandbreite der Übertragungsstrecke nur unzureichend übertragen werden, woraus sich keine Gewähr für eine exakte Erkennung eines Lecks ergibt.

Mittels einer Mustererkennung, bei der Frequenzspektren bekannter Leckgeräusche im Rechner gespeichert und mit den tatsächlichen vor Ort aufgenommenen Geräuschen verglichen werden, soll beispielsweise eine Leckerkennung erfolgen. Aufgrund des jeweils unterschiedlichen Übertragungsverhaltens, bedingt durch unter anderem unterschiedliche Bodenverhältnisse, ist diese Art der Erkennung praktisch nicht geeignet, ein garantiertes und reproduzierbares Ergebnis zu erzielen.

Weiter ist es bekannt, die Störgeräusche über ein separates Mikrofon aufzunehmen und von dem Signal abzuziehen, das an der zu überprüfenden Rohrleitung aufgenommen wurde. Als Ergebnis dieser adaptiven Filterung soll das Leckgeräusch übrig bleiben. Jedoch ist eine exakte Trennung, d. h., daß tatsächlich mit dem Zweitmikrofon ausschließlich Störgeräusche aufgenommen werden, praktisch nicht in dem erforderlichen Maß zu realisieren, so daß auch dieses Verfahren nicht geeignet ist, eine zuverlässige Erkennung zu ermöglichen.

Der vorliegenden Erfindung liegt daher die Aufgabe zugrunde, eine Verfahren der gattungsgemäßen Art so auszubilden, daß auf einfache und kostengünstige Art und Weise eine zuverlässige Leckstellenermittlung möglich ist.

Diese Aufgabe wird durch ein Verfahren gelöst, das die Merkmale des Anspruchs 1 aufweist.

Das so ausgebildete Verfahren erlaubt eine schnelle und überaus genaue Feststellung eines Lecks innerhalb üblicher Betriebszeiten.

Dabei macht sich die Erfindung zunutze, daß als einziges das Leckgeräusch ständig vorhanden ist, während Störgeräusche, die durch Entnahme oder äußere, also Umwelteinflüsse entstehen, nur kurzzeitig auftreten.

Dabei kann das Verfahren durch zwei unterschiedliche Grundeinstellungen durchgeführt werden.

So besteht einmal die Möglichkeit, daß zunächst das gesamte Geräusch übertragen wird. Mit fortschreitender Dauer der Messung werden nach und nach die nicht ständig vorhandenen Geräusche herausgefiltert, bis schließlich das ständig vorhandene Leckgeräusch übrigbleibt.

Zum zweiten besteht die Möglichkeit, daß zunächst kein Geräusch übertragen wird. Erst nach einer bestimmten Zeitdauer werden nach und nach die ständig vorhandenen Leckgeräusche übertragen. Diese Verfahrensweise stellt für den Lecksucher eine geringere Arbeitsbelastung dar.

Im übrigen können Signale mit hoher Amplitude im Frequenzbereich entfernt werden. Durch die Herausfilterung der Störgeräusche ist das Leckgeräusch auch in stark gestörten Umgebungen hörbar, wodurch sich die Sicherheit der Erfassung der Leckstelle erheblich verbessert.

Desweiteren wird durch die Erfindung eine sehr starke Datenreduzierung erreicht, die es ermöglicht, problemlos die relevanten Daten per Funk zu übertragen, so daß in besonders vorteilhafter Weise das erfindungsgemäße Verfahren auch im Korrelationsverfahren einsetzbar ist, durch das nicht nur eine Leckstellenerkennung, sondern auch eine Leckstellenortung möglich ist.

Ferner ist es denkbar, daß die Signalverarbeitung nicht unmittelbar vor Ort, sondern im Nachhinein erfolgt, wobei die aufgenommenen Geräusche bzw. das aufgenommene Leckgeräusch in geeigneter Weise aufgenommen und gespeichert wird.

Um den Umfang der aufbereiteten Signale zu reduzieren und so das Verfahren noch effektiver zu gestalten, können diese mit einem geeigneten Verfahren, wie es aus der Signalverarbeitung bekannt ist, komprimiert werden.

Die einzelnen Verfahrensschritte werden nachfolgend in Zusammenschau mit einem beigefügten Blockschaltbild beschrieben:
- ein über ein Mikrofon aufgenommenes akustisches Niederfrequenz(NF)-Signal (1), das entweder unmittelbar vom Mikrofon oder von einem Band oder aus einer Datei (WAV) eingespeist wird, wird mittels einer Abtastfrequenz in einzelne Muster zerlegt und digitalisiert.
- Von jede vorkommende Frequenz wird eine Fast Fourier Transformation (FFT)-Analyse berechnet (3).
- Für jede Frequenz werden die Phasenwinkel bestimmt und für jeden Phasenwinkel ein Frequenzhistogramm angelegt und die im Muster enthaltenen Frequenzanteile entsprechend ihrem Phasenwinkel in das jeweilige Frequenzhistogramm eingetragen (4).
- Die Frequenzanteile, die nicht ständig vorhanden sind, also eine geringe Häufigkeit aufweisen, werden im resultierenden Frequenzspektrum auf Null gesetzt oder über einen Faktor reduziert (5).
- Durch Berechnung einer inversen Fast Fourier Transformation (iFFT) wird das um die Störgeräusche gereinigte Signal in ein Zeitsignal zurückverwandelt (6).
- Dann wird dieses Zeitsignal direkt auf einen Kopfhörer gegeben, auf einem Datenträger zur weiteren Bearbeitung und/oder Dokumentation gespeichert oder per Funk oder Kabel an einen Leckrechner weitergegeben (7).

Die Charakteristik des Übertragungsverhaltens ist durch die Veränderung bestimmter Parameter und Faktoren beliebig einstellbar. Für den praktischen Einsatz wird sich eine vorteilhafte Grundeinstellung ergeben, die für das Erkennen von Leckgeräuschen optimal ist.

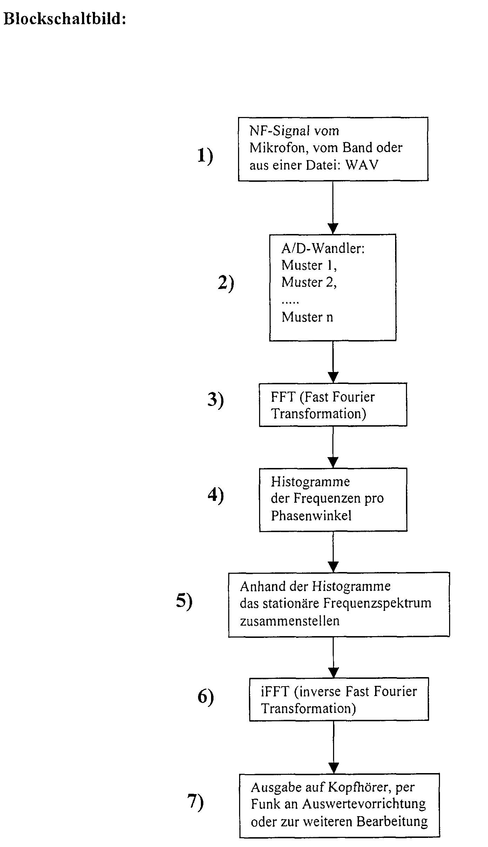

## Patentansprüche

1. Verfahren zur Feststellung einer Leckstelle in einer von einem unter Druck stehenden Medium durchströmten Rohrleitung, bei dem mittels eines Mikrofons im Bereich der Rohrleitung vorhandene Geräusche erfaßt, digitalisiert und ausgewertet werden, **dadurch gekennzeichnet**, daß mit den an sich bekannten Methoden der Signalverarbeitung die Frequenzanteile von typischerweise ungleichmäßig auftretenden Störgeräuschen und gegebenenfalls die eines für ein Leckgeräusch typischen Dauergeräusches ermittelt und ausgewertet werden.

2. Verfahren nach Anspruch 1, **dadurch gekennzeichnet,** daß von jeder im Geräusch enthaltenen Frequenz der Phasenwinkel bestimmt wird.

3. Verfahren nach Anspruch 1, **dadurch gekennzeichnet,** daß die Frequenzanteile der ungleichmäßig auftretenden Störgeräusche herausgefiltert werden.

4. Verfahren nach Anspruch 3, **dadurch gekennzeichnet**, daß die Frequenzanteile der Störgeräusche mit zunehmender Aufnahmedauer stärker herausgefiltert werden.

5. Verfahren nach Anspruch 1, **dadurch gekennzeichnet,** daß lediglich die Frequenzanteile des typischen Dauergeräusches zu einer Auswertevorrichtung übertragen werden.

6. Verfahren nach Anspruch 1, **dadurch gekennzeichnet,** daß die ermittelten und ausgewerteten Daten komprimiert werden.

7. Verwendung des Verfahrens nach Anspruch 1 zum Zwecke der Feststellung und Ortung einer Leckstelle mittels eines an sich bekannten Korrelationsverfahrens.
